# EUROPEAN PATENT SPECIFICATION

(11) **EP 0 387 071 B1**
(45) Date of publication and mention of the grant of the patent: **07.06.2006**
(21) Application number: 90302504.7
(22) Date of filing: 08.03.1990
(51) Int. Cl.: G06K 19/07, G06K 7/08

(54) **Codable electronic devices, e.g. transponders**
Kordierbare elektronische Vorrichtungen, z.B. Transponder
Dispositifs électroniques codables, p.ex. transpondeurs

(30) Priority: 09.03.1989 GB 8905440
(43) Date of publication of application: 12.09.1990
(73) Proprietor: Bewator AB, 171 24 Solna (SE)
(72) Inventor: Falck, John Bellew, Braintree, Essex (GB)
(74) Representative: Powell, Stephen David

(56) References cited:
- EP-A- 0 112 043
- EP-A- 0 217 654
- GB-A- 2 102 250
- US-A- 3 679 874

## Description

The present invention relates to transponder devices, and more particularly to transponder devices or tags which can be programmed and which, when interrogated, provide a response in accordance with the program. The programming of the tag may involve the entry of data into a memory or may modify the mode of operation of the tag.

At present there are two commonly-used techniques for remotely entering data into tags. The first is to use a carrier signal as a reference clock to control internal circuitry within the tag. A second signal at a different frequency is then used to write or enter the data. Such arrangements are disclosed in GB 2077556B and 2102250B. The alternative approach is to superimpose the data on the carrier by means of either phase or amplitude modulation. Where phase modulation is used, the carrier frequently is the means by which an internal reference oscillator within the tag is activated.

Both approaches have their limitations. With two separate input signals, it is necessary to incorporate two analogue input circuits and two input aerials. This both increases the cost of the tag and also the internal current requirements. In addition it involves a further burden of complexity on the control unit.

The use of a phase modulated approach with a single carrier requires that the system determines the sense of the aerials in the tag prior to writing any data. It also requires that the aerial orientation of the tag remains constant with respect to the aerials at the control equipment during the write phase. This involves a certain level of cost in additional circuitry and may impose some system limitations on its use.

Amplitude modulation overcomes the problem of orientation but suffers from limitations in dynamic range. For low frequency systems where the field strength decays in accordance with the inverse cube of range, adequate automatic gain control must be included within the input amplifier of the tag. This represents a difficult technical challenge and invariably limits the dynamic range which practically can be achieved.

The present invention seeks to provide read and write techniques capable of operating over a wide dynamic range which have neither the cost penalties of the double aerial input approach nor the system complexities associated with phase or amplitude modulation.

EP-A-0289136 discloses a data transmission system in which the output of a controller resonant circuit is pulsed to change the logic level of a data signal read into the memory of a tag. However, clocking is determined according to a data transmission protocol, so the tag must have an internal timing circuit. Where appropriate, a new data bit is generated without a change in the output of the controller resonant circuit.

EP-A-0112043 discloses a self-clocking binary receiver in which a data output is controlled by the lengths of pulses arriving at an input. US-A-3679874 also discloses an arrangement in which incoming pulses are integrated and are used to produce different logic outputs depending upon their length.

According to a first aspect of the present invention there is provided a codable electronic device as defined in claim 1.

An advantage of the above device is that the tag does not require internal timing means. The clocking of the data is effected solely by termination of the carrier pulses. This saves space, material and expense.

In a preferred device the data storage means comprises means for changing the functioning of the device. The content of the functioning changing means may be compared with a key which, upon the occurrence of matching, actuates means to permit data to be clocked into the main memory.

In a preferred arrangement, upon the occurrence of matching, the key enables a latch circuit which opens an AND-gate to pass signals from the reset output to the clock input of the main memory, the device further comprising means for producing a delayed reset signal if the time between successive carrier pulses exceeds a predetermined maximum value which resets the functioning changing means and the latch circuit, and means for resetting the functioning changing means if the duration of a carrier pulse exceeds a predetermined maximum value. An advantage of this arrangement is that the possibility is reduced of any random noise or unauthorised source interfering with the correct operation of the device.

A problem with existing tags is that they can interact in undesired ways with the control units of other tag systems. For example, electronic article surveillance (EAS) systems are in widespread use as anti-shoplifting systems, and the bearer of a coded tag for another system can inadvertently trigger the shop alarm with embarrassing results. The present invention also seeks to overcome this problem.

Accordingly, in another preferred arrangement the content of the functioning changing means is compared with a key which, upon the occurrence of matching, actuates means to permit the device to respond to a respective interrogation pulse transmitted thereto. This has the advantage that a number of different sets of coded devices may be used in a single building; devices in each set will only respond to interrogation pulses which are preceded by a signal corresponding to their respective key.

According to a second aspect of the present invention there is provided a method of imparting data to data storage means of a codable electronic device, as defined in claim 10.

The electronic device is preferably a transponder device such as an electronic tag and the data can constitute an actuating instruction, allowing the tag to transmit and/or receive further information.

In a preferred method, the duration of the pulse determines the value, "1" or "0", set up at a particular point within the electronic device, and the termination of the pulse causes said value to be entered into a shift register or a memory within the device.

Preferred embodiments of the present invention will now be described, by way of example only, with reference to the accompanying drawings, of which:
Fig.1 shows a block diagram of a transponder circuit; in accordance with a first embodiment of the present invention;
Fig.2 is a signal diagram relating to Fig.1;
Figs 3 and 4 show block diagrams of transponder circuits in accordance with second and third embodiments of the present invention, the bottom part of the embodiment of Fig.4 having been omitted since it corresponds to that of Fig.3; and
Fig.5 is a signal diagram relating to Fig.4.

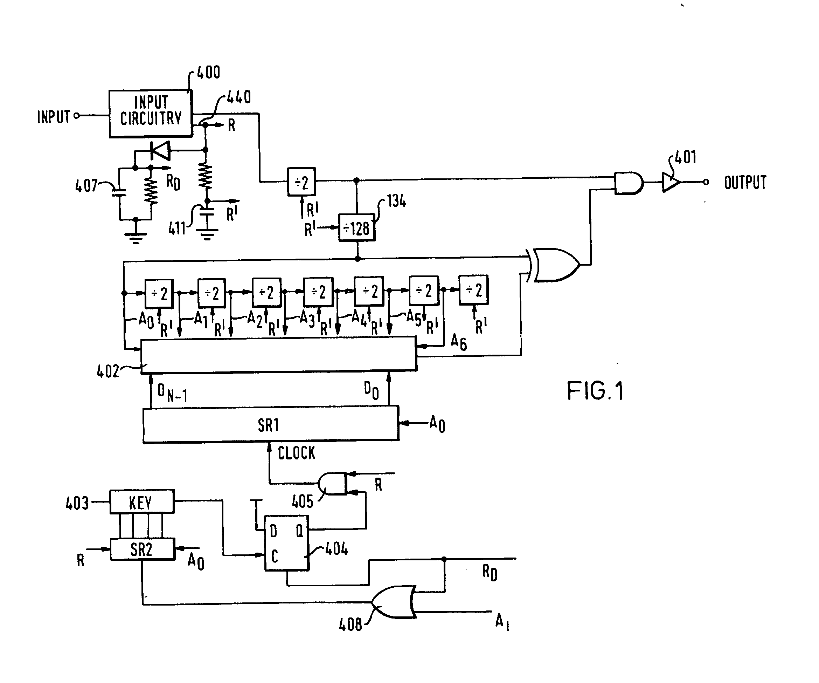

The circuit shown in Fig.1 has certain similarities with that disclosed in GB 2102250B.

The circuit comprises a 132KHz input amplifier 400 and an amplitude modulated output driver 401 at 66KHz. A divide-by-128 counter chain 134 is used to derive the essential internal timing functions. The data within the tag is accessed by means of the data selector 402 from the N bit shift register SR1. A second shift register SR2 comprising one or more stages provides a means by which the transponder may be switched to a write condition or mode. The state of the shift register SR2 is compared with a preset key 403. If a match exists between the shift register SR2 and the key 403 then a write latch 404 is enabled. The output of the write latch provides a first input to an AND gate 405. The second input to the AND gate is the reset R derived from output 440 of the input circuitry 400 and having a typical recovery time of 250µ sec. The output from AND gate 405 forms the clock input to the main shift register SR1. A second reset circuit 407 with a recovery time of approximately 2m sec is also derived from the first reset R. The output R_{D} from the second reset 407 is the reset input to the write latch 404. It is also, via OR gate 408, a reset to shift register SR2. It should be noted that R_{D} does not cause a reset automatically when R resets. R_{D} will only cause a reset if the next pulse arrives at an interval in excess of 2msec of R resetting. The second input to the OR gate 408 is derived from the A₁ output of the counter chain. The Aₒ output in the counter chain is the data input to both shift registers SR1 and SR2. The reset line to the divider chain 134 is delayed for approximately 1 - 5 micro sec by a delay circuit 411.

Operation of the circuit during a typical programming or write sequence will now be described. In order to put the circuit into a condition in which it will accept data, it is necessary first to transmit a predefined "key" signal. This prerequisite ensures protection of the internal memory against either unauthorised programming or data corruption from any sporadic high level noise sources. The key is entered by transmitting a predetermined train of pulses to the tag.

As soon as the circuit detects the first pulse in the train both reset circuits 440 and 407 are lifted. The divider chain 134 is then clocked at a rate determined by the frequency of the input signal. The state of the Ao input to both shift registers at any instant is a function of the number of cycles within the input pulse. Thus for an input signal at 132KHz for a duration of 1.5m sec, the A_{O} input to the shift register will be data 1. If the input signal is terminated after 1.5m sec the change in state of the reset circuit 400 will clock the data 1 into the shift register SR2. It will be appreciated that R and A_{O} are respectively the clock and data inputs into shift register SR2. Similarly a transmit pulse of 0.5m sec duration will clock a data 0 into shift register SR2. Any possible glitches which might corrupt the data input to the shift register SR2 are avoided by means of the delay circuit 411. This ensures that the divider chain 134 is not reset until after the data has been clocked into the shift register SR2. By sending a sequence of pulses of the appropriate duration it is thereby possible to enter the correct key into the shift register SR2.

Any data written into the shift register SR2 is held subject to two conditions. The first of these is that the data is reset if the period between successive pulses exceeds 2msec. If this happens, R_{D} resets shift register SR2 and the write latch 404. The second condition is that no pulse should exceed a duration of 2 msec. If this happens, A₁ switches to value "1" which, via OR gate 408, resets shift register SR2. These requirements significantly reduce the possibility of any random noise being clocked to the shift register SR2.

If the data written into the shift register SR2 matches the key 403 the write latch 404 is enabled at input C. This permits reset signal R, which is supplied to AND gate 405, to clock the data to the memory in the main shift register SR1.

Data can now be written into the main shift register SR1 by means of the same technique as used to write into the shift register SR2. Once data entry to the main shift register SR1 is complete, the write latch 404 is reset by the change in state of R_{D} on termination of the pulse train.

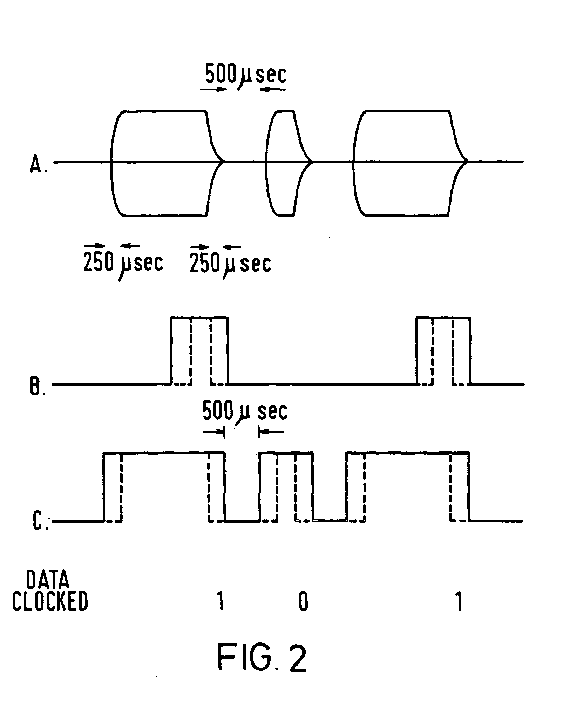

In practice there is a finite rise and fall time for the transmit signal from the control unit. The exact instant at which a tag will turn on will thus be a function of both its own response and of the range of the tag from the transmit aerial. Similarly there is a production tolerance between between tags for the recovery time of the reset circuits. These factors place a practical limit on the rate at which data may be written. This is illustrated by the waveforms in Fig.2.

Trace A shows a typical waveform for a pulse train transmitted at 132KHz by a controller. The rise and fall times of the transmit envelope are of the order of 250µ sec. Trace B shows the A_{O} output from the counter chain which forms the data input to shift registers SR1 and SR2. The solid line shows the A_{O} response when the tag is at close range. When the tag is at its maximum operational range, the A_{O} response is given by the broken line. It can be clearly seen that the limiting condition occurs at maximum range when the divider chain 134 will commence clocking 250µ sec after the commencement of the transmit pulse. This corresponds to the instant when the transmit envelope has reached its peak value.

Trace C shows the response of the reset line R. The reset line will lift within just one or two cycles of the 132KHz input signal. However, the time for the reset line to set at the end of a pulse is much longer and is subject to wide tolerances. Provided there is sufficient time between pulses to allow the reset line to recover to its rest condition this is not a concern. A worst case reset recovery time of 500µ sec is shown on the trace. As soon as the 132KHz input signal stops, the A_{O} input to both shift registers can no longer be clocked and is therefore fixed. It will simply remain in this state until the reset line R sets at which point the data is clocked into either of the shift registers. The small delay of say 1 - 5µ sec provided by the time delay circuit 411 ensures that the data from the A_{O} output is clocked into the shift registers before the counter chain is reset.

The transponder can accept data typically at a rate of 1.5m sec per data bit. By the nature of its operation it has a write range which essentially is the same as its read range. This is by way of contrast with many other techniques where the write range is frequently significantly less than the read range. It relies solely on a single input amplifier and thereby:
(i) Reduces the quiescent current requirement;
(ii) eliminates the need either to deal with a second input signal at a different frequency or to provide an internal oscillator; and
(iii) greatly simplifies the internal complexity of the custom chip and of the control unit.

Furthermore by writing to the transponder by means of a series of pulses there is no need for any complex AGC circuits within the custom chip as would be required for an amplitude modulated carrier. Also a pulse modulated approach does not suffer from any problems of orientation between tag and controller as is experienced with a phase modulated system.

There is thus provided a cheap and simple way of programming data into a transponder whereby the duration of any input pulse of less than a maximum defined period establishes the state of the data bit to be entered and termination of the pulse is the means by which the data bit is clocked into an internal memory within the transponder. Programming is authorised and effected by means of a train of pulses from a single carrier.

In a modification the reset input to latch 404 is taken from the output of OR gate 408 in which case prolonged transmission will also terminate the entry of data into shift register SR1.

In another modification the key 403 is configured in software and an initial data input to the transponder sets up the key. This is an example of how the parameters of a tag can be set up in software.

Although the circuit described above shows data being stored in a single shift register SR1, in practice the tag may have a much larger memory. In these circumstances the shift register SR1 would act in the capacity of an intermediate store. It would most usually be sub-divided into three fields comprising address, instruction and data. The data would be transferred from the shift register SR1 to the correct address within the main memory on decoding a write instruction from the controller.

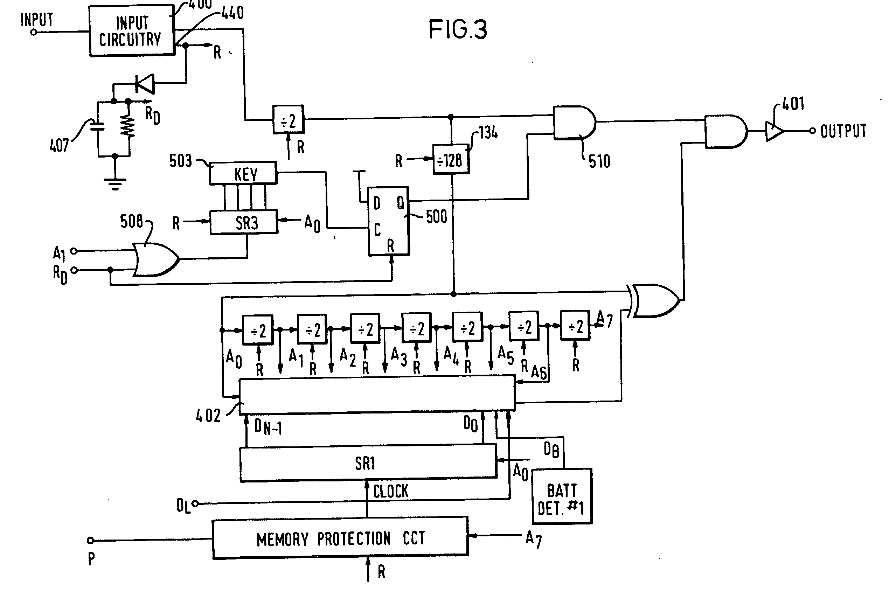

Fig.3 shows a second embodiment of the present invention which also has similarities with that disclosed in GB 2102250B. In this embodiment, however, the transfer of data by pulse train encoding is used to control the operating characteristics of a tag. This may be of value for example where within the same building it may be desirable to have two families of tags. One family might be attached to individual high value goods for asset tracking purposes. The second family of tags might be used for access control. Without any form of discrimination between the families, a person with an access card who was carrying a tagged asset could not be read, and the article would not be identified.

By assigning a different key signal to each family of tags, they can each be turned on selectively. One way by which this can be achieved is with the circuit shown in Fig.3.

In Fig.3, an extra AND gate 510 is inserted in the line from the input to the output of the tag. A second input of the AND gate receives a signal from the Q output of a latch 500. The latch is controlled in a manner similar to latch 404 above by a circuit comprising an OR gate 508, a shift register SR3 and a key circuit 503. OR gate 508 receives as inputs A₁ from the divider circuitry and delayed reset signal R_{D} from circuit 407. The output of OR gate 508 constitutes the reset input of shift register SR3 which receives reset signal R from output 440 of input circuit 400 as its clock pulse, and divider output A_{O} as its data input.

Under normal circumstances the tag is unable to output any data since it is inhibited by the control latch 500. However, on receipt of a pulse train which comprises the correct key as detected by circuit 503, the control latch 500 is lifted. If the pulse train is followed immediately by an interrogation pulse, i.e. before a reset signal R_{D} occurs, the tag will output the data held in its shift register SR1 in the normal way.

A particularly advantageous application of the above arrangement arises where a simple detection system used in electronic article surveillance (EAS) may activate a coded tag. If the coded tag responds with a signal at the same frequency as the EAS tag, the EAS control unit will give a false alarm. This very undesirable effect can be eliminated by requiring that in order for a coded tag to respond to an interrogation signal, the signal must be preceded by a predetermined key signal, as in Fig.3.

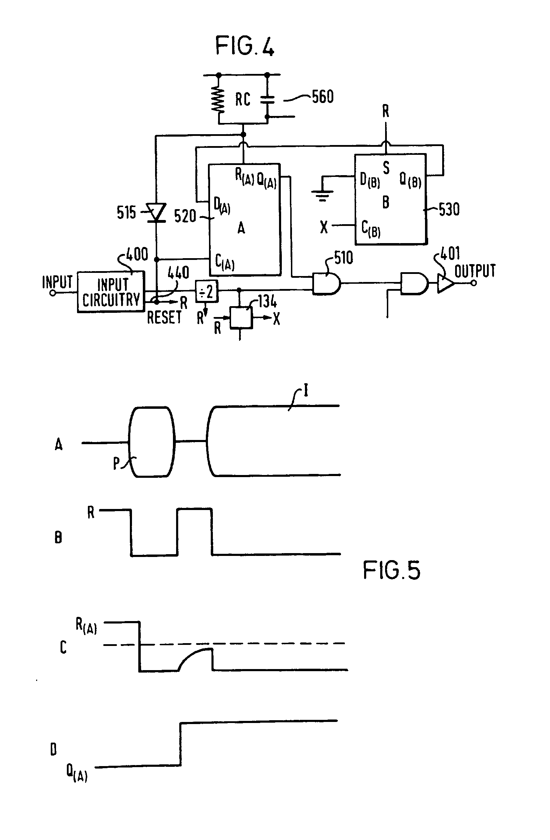

An even simpler inhibit circuit can be provided for this purpose as will now be described with reference to Figs 4 and 5. In this embodiment the reset R from output 440 of input circuitry 400 is connected to the clock input C_{(A)} of a data storage means comprising an A-flip-flop 520, to the set input S of B-flip-flop 530 and via a diode 515 to the reset input R_{(A)} of flip-flop 520. An output Q_{(A)} of flip-flop 520 is supplied to the second input of AND-gate 510. In this embodiment, the rest state of reset output R is shown as high rather than low as in the embodiments of Figs 1 and 3.

The clock input C_{(B)} of flip-flop 530 is an output X from counter chain 134 which has a period of 5.82 msec. The data input D_{(B)} of flip-flop 530 is held at zero and the output Q_{(B)} is supplied as the data input D_{(A)} of flip-flop 520. An RC circuit 560 is connected to reset input R_{(A)} so that when R goes low, R_{A} goes low simultaneously because of diode 515, but when R goes high again, the voltage at R_{(A)} rises only gradually as determined by the RC time constant of circuit 560.

The functioning of the circuit of Fig.4 will now be described with reference to Fig.5 in which:
Trace A shows a main interrogation pulse I preceded by a short carrier pulse P;
Trace B shows the resulting course of the reset signal R from output 440;
Trace C shows the corresponding course of the voltage at the reset input R_{(A)} of flip-flop 520; and
Trace D shows the output Q_{(A)} of flip-flop 520 supplied to AND-gate 510.

In the rest condition reset R is high and the output Q_{(A)} from flip-flop 520 is low which inhibits operation of AND gate 510. S, Q_{(B)} and D_{(A)} are all high. The subsequent presence of a 132 khz carrier signal P at input 400 causes R to go low (see trace B in Fig.5) which removes the reset signals from inputs R_{(A)} and S. Upon termination of the carrier signal pulse, reset R goes high which clocks the current value of D_{(A)} as the output Q_{(A)} supplied to AND-gate 510. There are two alternatives.

The first case is when the carrier pulse is shorter than 2.91 msec i.e. half the period of X. In this case the clock input C_{(B)} remains low and thus Q_{(B)} remains high and thus a high signal is supplied to AND-gate 510 to enable the transponder to respond to a subsequent main interrogation signal I.

The second case is when the carrier pulse signal P is longer than 2.91 msec. Here X goes high after 2.91 msec so that Q_{(B)} is clocked low, and thus on termination of the carrier pulse P a low signal continues to be supplied to AND-gate 510, inhibiting response by the transponder. Thus it can be seen that the logic value Q_{(B)} is dependent upon the length of an incoming carrier pulse.

The circuit of Fig.4 effects a further check on the validity of the interrogation signal in that, unless the main interrogation pulse I follows the initial pulse P within a period defined by the reset time of the RC circuit 560, R_{(A)} rises to reset flip-flop 520.

The tag system of Fig.1 can be combined as appropriate with the tag system of Fig.3 or Fig.4.

Although the invention has been described in relation to transponder devices, it can also be used in connection with one-way devices such as simple data-storing devices and beacons.

## Claims

1. A codable electronic device comprising input circuitry (400) and data storage means (SR1, SR2, SR3, 520), said input circuitry being arranged to receive a radiated carrier signal, and said device comprising frequency divider or counter circuit means (134) connected to receive the carrier signal from said input circuitry, said frequency divider or counter circuit means (134) having an output line supplying to said data storage means a logic signal (Aₒ,Q_{(B)}), **characterised in that**
the logic value of said logic signal is dependent upon the length of a respective incoming carrier signal pulse received by said input circuitry,
reset output means (440) of the input circuitry are provided
- which are connected to an input which clocks data into the data storage means (SR1, SR2, SR3, 520)
- which prevent said logic value being supplied to said data storage means until termination of a pulse of said respective carrier signal, and
- which also prevent said logic value from actuating said data storage means to supply said data output if the duration of said respective carrier signal pulse exceeds a predetermined maximum value.

2. A device according to claim 1, wherein the data storage means comprises means (SR2, SR3, 520) for changing the functioning of the device, wherein the means providing the logic signal (Aₒ, Q_{(B)};) thereto comprises a divider chain (134).

3. A device according to claim 2, wherein the data storage means further comprises a main memory (SRI) and wherein the content of the functioning changing means (SR2) is compared with a key (403) which, upon the occurrence of matching, actuates means (404, 405) to permit data to be clocked into the main memory (SR1).

4. A device according to claim 3, wherein upon the occurrence of matching, the key (403) enables a latch circuit (404) which opens an AND-gate (405) to pass signals from the reset output (440) to the clock input (CLOCK) of the main memory (SR1), the device further comprising means (407) for producing a delayed reset signal (R_{D}) if the time between successive carrier pulses exceeds a predetermined maximum value which resets the functioning changing means (SR2) and the latch circuit (404), and means (A₁) for resetting the functioning changing means (SR2) if the duration of a carrier pulse exceeds a predetermined maximum value.

5. A device according to claim 2, wherein the content of the functioning changing means (SR3) is compared with a key (503) which, upon the occurrence of matching, actuates means (500, 510) to permit the device to respond to a respective interrogation pulse transmitted thereto.

6. A device according to claim 5, wherein, upon the occurrence of matching, the key (503) enables a latch circuit (500) which opens an AND-gate (510) to pass signals from input circuitry (400) to a device output (401).

7. A device according to claim 2, wherein the data storage means (520) comprises a first flip-flop (520), wherein the means providing the logic signal (Q_{(B)}) thereto comprises a second flip-flop (530) which receives as a clocking input thereto a signal (X) from said divider chain (134), and wherein, upon receipt of a carrier pulse having satisfactory length, the first flip-flop actuates means (510) to permit the device to respond to an interrogation pulse.

8. A device according to claim 7, wherein the second flip-flop has a set input (D_{(B)}) held at zero, a clock input (C_{(B)}) connected to receive said signal (X) from said divider chain and an output (Q_{(B)}) connected to the data input (D_{(A)}) of said first flip-flop, th first flip-flop having a clock input (C_{(A)}) connected to said reset output (440) and an output (Q_{(A)}) connected to said means (510) for permitting the device to respond to a subsequent interrogation pulse.

9. A device according to claim 7 wherein the first flip-flop (520) has a reset input (R_{(A)}) which has a resetting signal applied thereto a predetermined period after the termination of a carrier pulse unless it is followed, within said period, by an interrogation pulse.

10. A method of imparting data to data storage means (SR1, SR2, SR3, 520) of a codable electronic device,
the codable electronic device comprising input circuitry (400) having an output connected to a frequency divider or counter circuit means (134) which has an output line connected to said data storage means,
the method comprising the steps of:
supplying pulses of a radiated carrier signal to said input circuitry, each of said pulses having a controlled length,
dividing said carrier pulses in said frequency divider or counter circuit means whereby to produce a logic signal (Aₒ,Q_{(B)}),
the logic value of said logic signal is dependent upon the length of a respective incoming carrier signal pulse received by said input circuitry and using the termination of each said carrier signal pulse
- to cause the respective logic value to be supplied to said data storage means,
- to prevent said logic value being supplied to said data storage means until termination of a pulse of said respective carrier signal,
- but preventing said logic value from actuating said data storage means to supply said data output if the duration of said respective carrier signal pulse exceeds a predetermined maximum value.

11. A method according to claim 10 wherein the codable electronic device further comprises a reset output (440) which produces a reset signal (R) upon termination of a said carrier signal pulse, and the method comprises using said reset signal to cause the respective logic value (Aₒ,Q_{(B)}) to be supplied to said data storage means.

## Patentansprüche

1. Kodierbares elektronisches Gerät, das einen Eingangs-Schaltkreis (400) und Datenspeichermittel (SR1, SR2, SR3, 520) aufweist, wobei der Eingangs-Schaltkreis ausgelegt ist, ein ausgestrahltes Trägersignal zu empfangen, und wobei das Gerät Frequenzteiler- oder Zählerschaltungsmittel (134) aufweist, die zum Empfangen des Trägersignals von dem Eingangs-Schaltkreis geschaltet sind, wobei die Frequenzteiler- oder Zählerschaltungsmittel (134) eine Ausgangsleitung aufweisen, die den Datenspeichermitteln ein logisches Signal (A₀, Q_{(B)}) zuführen, **dadurch gekennzeichnet, dass**
der logische Wert des logischen Signals von der Länge des jeweiligen ankommenden Trägersignalpulses, der durch den Eingangs-Schaltkreis empfangen wird, abhängig ist,
Rückstellsignal-Ausgabemittel (440) des Eingangs-Schaltkreises vorgesehen sind,
welche mit einem Eingang, der Daten in die Datenspeichermittel (SR1, SR2, SR3, 520) einliest, verbunden sind,
welche verhindern, dass der logische Wert in die Datenspeichermittel geliefert wird bis zur Beendigung eines Pulses des jeweiligen Trägersignals, und
welche ebenfalls verhindern, dass der logische Wert die Datenspeichermittel aktiviert, den Datenausgabe zu liefern, wenn die Dauer des jeweiligen Trägersignalpulses einen vorgegebenen Maximalwert überschreitet.

2. Gerät nach Anspruch 1, bei dem die Datenspeichermittel Mittel (SR2, SR3, 520) zum Ändern der Funktionsweise des Geräts aufweisen, wobei die Mittel, die das logische Signal (A₀, Q_{(B)}) diesem bereitstellen, eine Teilerkette (134) aufweisen.

3. Gerät nach Anspruch 2, bei dem die Datenspeichermittel ferner einen Hauptspeicher (SRI) aufweisen und bei dem der Inhalt der Funktions-Änderungsmittel (SR2) mit einem Schlüssel (403) verglichen wird, welcher beim Auftreten von Übereinstimmung Mittel (404, 405) aktiviert, um zu gestatten, dass Daten in den Hauptspeicher (SR1) eingelesen werden.

4. Gerät nach Anspruch 3, bei dem beim Auftreten von Übereinstimmung der Schlüssel (403) eine Latch-Schaltung (404) aktiviert, die ein UND-Gatter (405) öffnet, um Signale von dem Rückstell-Ausgang (440) zu dem Takt-Eingang (CLOCK) des Hauptspeichers (SR1) durchzulassen, wobei das Gerät ferner Mittel (407) zum Erzeugen eines verzögerten Rückstell-Signals (R_{D}) aufweist, wenn die Zeit zwischen aufeinanderfolgenden Trägerpulsen einen vorgegebenen Maximalwert überschreitet, der die Funktions-Änderungsmittel (SR2) und die Latch-Schaltung (404) zurückstellt, und Mittel (A₁) zum Zurückstellen der Funktions-Änderungsmittel (SR2) aufweist, wenn die Dauer eines Trägerpulses einen vorgegebenen Maximalwert überschreitet.

5. Gerät nach Anspruch 2, bei dem der Inhalt der Funktions-Änderungsmittel (SR3) mit einem Schlüssel (503) verglichen wird, welcher beim Auftreten von Übereinstimmung Mittel (500, 510) betätigt, um zu gestatten, dass das Gerät auf einen jeweiligen Abfragepuls antwortet, der zu diesem übertragen wurde.

6. Gerät nach Anspruch 5, bei dem beim Auftreten von Übereinstimmung der Schlüssel (503) eine Latch-Schaltung (500) aktiviert, welche ein UND-Gatter (510) öffnet, um Signale vom Eingangs-Schaltkreis (400) zu einem Geräte-Ausgang (401) durchzulassen.

7. Gerät nach Anspruch 2, bei dem die Datenspeichermittel (520) einen ersten Flipflop (520) aufweisen, wobei die Mittel, die demselben das logische Signal (Q_{(B)}) bereitstellen, einen zweiten Flipflop (530) aufweisen, welcher ein Signal (X) von der Teilerkette (134) als ein Takteingangssignal zu demselben empfängt, wobei beim Empfang eines Trägerpulses mit einer ausreichenden Länge der erste Flipflop Mittel (510) betätigt, um zu gestatten, dass das Gerät auf einen Abfragepuls antwortet.

8. Gerät nach Anspruch 7, bei dem der zweite Flipflop einen auf Null gehaltenen Einstell-Eingang (D_{(B)}), einen Takt-Eingang (C_{(B)}), der zum Empfangen des Signals (X) von der Teilerkette geschaltet ist, und einen Ausgang (Q_{(B)}) aufweist, der mit dem Daten-Eingang (D_{(A)}) des ersten Flipflops verbunden ist, wobei der erste Flipflop einen Takt-Eingang (C_{(A)}), der mit dem Rückstell-Ausgang (440) verbunden ist und einen Ausgang (Q_{(A)}) aufweist, der mit den Mitteln (510) verbunden ist, um zu gestatten, dass das Gerät auf einen nachfolgenden Abfragepuls antwortet.

9. Gerät nach Anspruch 7, bei dem der erste Flipflop (520) einen RückstellEingang (R_{(A)}) aufweist, welcher ein Rückstell-Signal hat, das diesem eine vorgegebene Zeit nach Beendigung eines Trägerpulses zugeführt wird, wenn diesem nicht innerhalb des Zeitraums ein Abfragepuls folgt.

10. Verfahren zum Beigeben von Daten zu Datenspeichermitteln (SR1, SR2, SR3, 520) eines kodierbaren elektronischen Geräts,
wobei das kodierbare elektronische Gerät einen Eingangs-Schaltkreis (400) mit einem Ausgang aufweist, der mit einem Frequenzteiler oder Zählerschaltungsmitteln (134) verbunden ist, welche eine mit den Datenspeichermitteln verbundene Ausgangsleitung aufweisen,
wobei das Verfahren die folgenden Schritte aufweist:
Zuführen von Pulsen eines ausgestrahlten Trägersignals zu dem Eingangs-Schaltkreis, wobei jeder der Pulse eine kontrollierte Länge aufweist,
Teilen der Trägerpulse in dem Frequenzteiler oder in Zählerschaltungsmitteln, um dadurch ein logisches Signal (A₀, Q_{(B)}) zu erzeugen,
der logische Wert des logischen Signals ist von der Länge eines jeweiligen ankommenden Trägersignalpulses abhängig, der von dem Eingangs-Schaltkreis empfangen wird, wobei die Beendigung jedes der Trägersignalpulse verwendet wird,
- um zu veranlassen, dass der jeweilige logische Wert den Datenspeichermitteln zugeführt wird,
- um zu verhindern, dass der logische Wert den Datenspeichermitteln zugeführt wird bis zur Beendigung eines Pulses des jeweiligen Trägersignals,
- wobei aber verhindert wird, dass der logische Wert die Datenspeichermittel aktiviert, die Datenausgabe zuzuführen, wenn die Dauer des jeweiligen Trägersignalpulses einen vorgegebenen Maximalwert überschreitet.

11. Verfahren nach Anspruch 10, bei dem das kodierbare elektronische Gerät ferner einen Rückstell-Ausgang (440) aufweist, welcher ein Rückstell-Signal (R) bei Beendigung eines Trägersignalpulses erzeugt, und das Verfahren ein Verwenden des Rückstell-Signals aufweist, um zu veranlassen, dass der jeweilige logische Wert (A₀, Q_{(B)}) den Datenspeichermitteln zugeführt wird.

## Revendications

1. Dispositif électronique programmable comprenant des circuits d'entrée (400) et des moyens de stockage de données (SR1, SR2, SR3, 520), lesdits circuits d'entrée étant agencés pour recevoir un signal porteur rayonné, et ledit dispositif comprenant des moyens de circuit compteur ou diviseur de fréquence (134) connectés de manière à recevoir le signal porteur desdits circuits d'entrée, ledit moyen de circuit compteur ou diviseur de fréquence (134) ayant une ligne de sortie fournissant audit moyen de stockage de données un signal logique (Aₒ, Q_{(B)}), **caractérisé en ce que** :
la valeur logique dudit signal logique dépend de la longueur d'une impulsion d'un signal porteur entrant respectif reçue par lesdits circuits d'entrée,
un moyen de sortie de remise à zéro (440) des circuits d'entrée est prévu,
- qui est connecté à une entrée qui envoi séquentiellement les données vers les moyens de stockage de données (SR1, SR2, SR3, 520)
- qui empêche ladite valeur logique d'être fournie auxdits moyens de stockage de données avant la fin d'une impulsion dudit signal porteur respectif, et
- qui empêche également ladite valeur logique d'actionner lesdits moyens de stockage de données pour fournir ladite sortie de données si la durée de ladite impulsion du signal porteur respectif dépasse une valeur maximale prédéterminée.

2. Dispositif selon la revendication 1, dans lequel les moyens de stockage de données comprennent des moyens (SR2, SR3, 520) permettant de modifier le fonctionnement du dispositif, dans lequel les moyens fournissant le signal logique (Aₒ, Q_{(B)}) dans ce but comprennent une chaîne de division (134).

3. Dispositif selon la revendication 2, dans lequel les moyens de stockage de données comprennent en outre une mémoire principale (SR1), et dans lequel le contenu du moyen de modification de fonctionnement (SR2) est comparé à une clé (403) qui, en cas de correspondance, actionne les moyens (404, 405) pour permettre aux données d'être envoyées séquentiellement à la mémoire principale (SR1).

4. Dispositif selon la revendication 3, dans lequel, en cas de correspondance, la clé (403) active un circuit de verrouillage (404) qui ouvre une porte ET (405) pour laisser passer les signaux de la sortie de remise à zéro (440) à l'entrée d'horloge (CLOCK) de la mémoire principale (SR1), le dispositif comprenant en outre un moyen (407) permettant de produire un signal de remise à zéro retardé (R_{D}) si le temps qui s'écoule entre les impulsions du signal porteur successives dépasse une valeur maximale prédéterminée qui remet à zéro le moyen de modification de fonctionnement (SR2) et le circuit de verrouillage (404), et un moyen (A₁) permettant de remettre à zéro le moyen de modification de fonctionnement (SR2) si la durée d'une impulsion du signal porteur dépasse une valeur maximale prédéterminée.

5. Dispositif selon la revendication 2, dans lequel le contenu du moyen de modification de fonctionnement (SR3) est comparé à une clé (503) qui, en cas de correspondance, actionne les moyens (500, 510) pour permettre au dispositif de répondre à une impulsion d'interrogation respective qui lui est transmise.

6. Dispositif selon la revendication 5, dans lequel, en cas de correspondance, la clé (503) active un circuit de verrouillage (500) qui ouvre une porte ET (510) pour faire passer des signaux des circuits d'entrée (400) à une sortie de dispositif (401).

7. Dispositif selon la revendication 2, dans lequel le moyen de stockage de données (520) comprend une première bascule FLIP-FLOP (520), dans lequel le moyen fournissant le signal logique (Q_{(B)}) à celui-ci comprend une deuxième bascule (530) qui reçoit en tant qu'entrée d'horloge un signal (X) de ladite chaîne de division (134), et dans lequel, lors de la réception d'une impulsion de signal porteur présentant une longueur satisfaisante, la première bascule actionne le moyen (510) pour permettre au dispositif de répondre à une impulsion d'interrogation.

8. Dispositif selon la revendication 7, dans lequel la deuxième bascule présente une entrée de mise à 1 (D_{(B)}) maintenue à zéro, une entrée d'horloge (C_{(B)}) connectée de manière à recevoir ledit signal (X) de ladite chaîne de division et une sortie (Q_{(B)}) connectée à l'entrée de données (D_{(A)}) de ladite première bascule, la première bascule ayant une entrée d'horloge (C_{(A)}) connectée à ladite sortie de remise à zéro (440) et une sortie (Q_{(A)}) connectée audit moyen (510) permettant au dispositif de répondre à une impulsion d'interrogation subséquente.

9. Dispositif selon la revendication 7, dans lequel la première bascule (520) présente une entrée de remise à zéro (R_{(A)}) à laquelle est appliqué un signal de remise à zéro pendant une période de temps prédéterminée après la fin d'une impulsion du signal porteur à moins qu'il soit suivi, dans ladite période, d'une impulsion d'interrogation.

10. Procédé permettant d'appliquer des données à des moyens de stockage de données (SR1, SR2, SR3, 520) d'un dispositif électronique programmable,
le dispositif électronique programmable comprenant des circuits d'entrée (400) ayant une sortie connectée à un moyen de circuit compteur ou diviseur de fréquence (134) dont une ligne de sortie est connectée audit moyen de stockage de données,
le procédé comprenant les étapes consistant à :
fournir des impulsions d'un signal porteur rayonné auxdits circuits d'entrée, chacune desdites impulsions ayant une longueur contrôlée,
diviser lesdites impulsions du signal porteur dans ledit moyen de circuit compteur ou diviseur de fréquence de manière à produire un signal logique (Aₒ, Q_{(B)}),
la valeur logique dudit signal logique dépend de la longueur d'une impulsion du signal porteur entrant respectif reçue par lesdits circuits d'entrée et utilisant la fin de chacune desdites impulsions du signal porteur
- pour faire en sorte que la valeur logique respective soit fournie audit moyen de stockage de données,
- pour empêcher ladite valeur logique d'être fournie audit moyen de stockage de données avant la fin d'une impulsion dudit signal porteur respectif,
- mais empêchant ladite valeur logique d'actionner ledit moyen de stockage de données pour fournir ladite sortie de données si la durée de ladite impulsion du signal porteur respectif dépasse une valeur maximale prédéterminée.

11. Procédé selon la revendication 10, dans lequel le dispositif électronique programmable comprend en outre une sortie de remise à zéro (440) qui produit un signal de remise à zéro (R) à la fin d'une dite impulsion du signal porteur, et le procédé comprend l'utilisation dudit signal de remise à zéro pour faire en sorte que la valeur logique respective (Aₒ, Q_{(B)}) soit fournie audit moyen de stockage de données.
